# EUROPEAN PATENT SPECIFICATION

(11) **EP 2 661 044 B1**
(45) Date of publication and mention of the grant of the patent: **16.01.2019**
(21) Application number: 11854481.6
(22) Date of filing: 12.10.2011
(51) Int. Cl.: H04L 29/06

(54) **REMOTE AUTHENTICATION BETWEEN A MOBILE DEVICE AND AN AUDIO-VIDEO PRODUCT IN A PLAYER**
FERNAUTHENTIFIZIERUNG ZWISCHEN EINEM MOBILGERÄT UND EINEM AUDIO-VIDEO PRODUKT IN EINEM LESEGERÄT
AUTHENTIFICATION À DISTANCE ENTRE UN DISPOSITIF MOBILE ET UN PRODUIT AUDIO-VIDÉO DANS UN LECTEUR

(30) Priority: 31.12.2010 CN 201010619857
(43) Date of publication of application: 06.11.2013
(73) Proprietor: Huizhou TCL Mobile Communication Co., Ltd., Huizhou, Guangdong 516006 (CN)
(72) Inventor: LUO, Jun, Guangdong 516006 (CN); GE, Qi, Guangdong 516006 (CN)
(74) Representative: ZHAOffice SPRL
(86) International application number: PCT/CN2011/080714
(87) International publication number: WO 2012/088944

(56) References cited:
- CN-A- 1 615 034
- CN-A- 1 615 034
- CN-A- 101 055 608
- CN-A- 101 055 608
- CN-A- 102 065 096
- CN-A- 102 065 096
- JP-A- 2007 184 038
- US-A1- 2006 089 123

## Description

### Technical Field

The present invention relates to the technical field of communications, and more particularly to a player, a mobile communication device, an authentication server, an authentication system and method.

### Background Technology

As piracy starts to cause serious impact to the survival and development of the audio-visual industry, various copyrighted-content-based encryption and authentication methods emerge. However, the conventional encryption and authentication techniques all attempt to prevent reproduction by way of encryption based on a disk carrier, and the authentication process is always conducted on the player side. Since the authentication data and services both happen on the player side, illegal users are very likely to successfully break into the player, such that the conventional technology fails to provide reliable copyright protection for the audio-visual products.

The US patent application US20060089123A1 discloses methods and systems are provided that use information on smartcards, such subscriber identity module (SIM) cards for authentication and encryption. One embodiment of the invention provides a mobile communication network architecture that includes a mobile network, a mobile terminal, a server coupled to the mobile terminal via the mobile network, and a SIM card coupled to the mobile terminal. The SIM card includes a first key and a second key. The first key is used to authenticate an intended user of the mobile terminal to the mobile network and the second key is used to authenticate the intended user to the server.

The Chinese patent application CN1615034A discloses a mobile communicating system and method with digital copyright protection and authentication, the system consists of mobile communication terminal and mobile communication network service system. The mobile communication terminal, where a digital watermarking loading module is set up, has video cameral device, for loading the digital watermarking message into the image and video data shot by the mobile communication terminal. The multimedia digital copyright authentication server is set up at the mobile communication network service system for receiving the image and video data requesting authentication and analyzing their digital watermarking to make copyright authentication.

The Chinese patent application CN101055608A discloses a system and method for managing and protecting digital copyright. The system comprises a database server, a key pairs generating apparatus, a digital media file right certification device, a digital certificate apparatus, a DRM file pack device, a DRM file pack program downloading apparatus, a user right apparatus, a metadata apparatus as well as a digital media file playing device. The method includes that: the user downloads and disposes a DRM file pack program, packs the DRM for digital media file, and issues the DRM-packed digital media file, as well as certificates, authorizes and uses the DRM-packed digital media file right.

In view of the above, there exists an urgent need to provide a new authentication solution, wherein authentication data and authentication service are separated from each other. Unlike the existing anti-duplication technology, this new solution no longer incurs both the authentication data and the authentication process on the player side, thereby making it unlikely to break into a player and thus providing a more reliable copyright protection for the audio-visual products.

### Summary of the Invention

The object of the present invention is to provide a player, a mobile communication device, an authentication server, an authentication system and method, which address the defect existing with the conventional technology that a player is likely to be broken into due to coexistence of the authentication data and the authentication process on the player side, and accordingly provides more reliable copyright protection for the audio-visual products.

To fulfill the aforesaid object, the present disclosure also provides an authentication method according to claim 1, the authentication method comprises: a) acquiring authentication data recorded in an audio-visual product using a player, and transmitting the authentication data to a mobile communication device; b) transmitting the authentication data from the mobile communication device to an authentication server; c) authenticating the authentication data at the authentication server to provide an authentication result; d) transmitting the authentication result from the authentication server to the mobile communication device; and e) transmitting the authentication result from the mobile communication device to the player; a first data packet having a first data format is communicated between the player and the mobile communication device, a second data packet having a second data format is communicated between the mobile communication device and the authentication server; the first data packet of the first data format comprising Segment "Frame Begin", Segment "Add", Segment "Type", Segment "LEN", Segment "Data", Segment "CRC", and Segment "Frame End"; the Segment "Frame Begin" has a length of one byte; the Segment "Add" is set to "reserved" in order to distinguish data channels and has a length of one byte; the Segment "Type" is adapted to define information contained in the Segment "Data" as a data content or a control command, the data content is the authentication data or the authentication result, the control command is adapted to denotes an inquiry of whether the mobile communication device has been connected to a network, when the Segment "Data" includes the data content, the data content has a length ranging from zero to 127 bytes, when the Segment "Data" includes the control command, the control command has a length of two bytes; the Segment "LEN" represents the length of Segment "Data" and has a length of two bytes; the Segment "CRC" is adapted to perform a Cyclic Redundancy Check on the data frame and has a length of two bytes; the Segment "Frame End" has a length of one byte; the second data packet is a TCP data packet; the player and the mobile communication device are connected with each other wiredly or wirelessly using a USB, a serial interface, Bluetooth or WIFI, the network is the network consisting of the mobile communication device and the authentication server.

Step a) comprises integrating the authentication data into the first data packet of the first data format using the player.

Step b) comprises integrating the authentication data into the TCP data packet by the mobile communication device.

To fulfill the aforesaid object, further disclosed in the present disclosure is a player for rendering an audio-visual product according to claim 4, the player comprises: an authentication data acquisition module adapted to acquire authentication data from an audio-visual product; and a transceiving module adapted to transmit the authentication data to a mobile communication device and receive an authentication result from the mobile communication device; a first data packet having a first data format is communicated between the player and the mobile communication device; the first data packet of the first data format comprising Segment "Frame Begin", Segment "Add", Segment "Type", Segment "LEN", Segment "Data", Segment "CRC", and Segment "Frame End"; the Segment "Frame Begin" has a length of one byte; the Segment "Add" is set to "reserved" in order to distinguish data channels and has a length of one byte; the Segment "Type" is adapted to define information contained in the Segment "Data" as a data content or a control command, the data content is the authentication data or the authentication result, the control command is adapted to denotes an inquiry of whether the mobile communication device has been connected to a network, when the Segment "Data" includes the data content, the data content has a length ranging from zero to 127 bytes, when the Segment "Data" includes the control command, the control command has a length of two bytes; the Segment "LEN" represents the length of Segment "Data", and has a length of two bytes; the Segment "CRC" is adapted to perform a Cyclic Redundancy Check on the data frame and has a length of two bytes; the Segment "Frame End" has a length of one byte; the player and the mobile communication device are connected with each other wiredly or wirelessly using a USB, a serial interface, Bluetooth or WIFI, the network is the network consisting of the mobile communication device and the authentication server.

The player further comprises a first data processing module adapted to integrate the authentication data into a first data packet of the first data format.

The present invention also discloses a mobile communication device according to claim 6, the mobile communication device comprises: a first transceiving module adapted to receive authentication data from a player; and a second wireless transceiving module adapted to transmit the authentication data to an authentication server and receive an authentication result from the authentication server, which authentication result is then transmitted from the first transceiving module to the player; a first data packet having a first data format is communicated between the player and the mobile communication device, a second data packet having a second data format is communicated between the mobile communication device and the authentication serve; the first data packet of the first data format comprising Segment "Frame Begin", Segment "Add", Segment "Type", Segment "LEN", Segment "Data", Segment "CRC", and Segment "Frame End"; the Segment "Frame Begin" has a length of one byte; the Segment "Add" is set to "reserved" in order to distinguish data channels and has a length of one byte; the Segment "Type" is adapted to define information contained in the Segment "Data" as a data content or a control command, the data content is the authentication data or the authentication result, the control command is adapted to denotes an inquiry of whether the mobile communication device has been connected to a network, when the Segment "Data" includes the data content, the data content has a length ranging from zero to 127 bytes, when the Segment "Data" includes the control command, the control command has a length of two bytes; the Segment "LEN" represents the length of Segment "Data", and has a length of two bytes; the Segment "CRC" is adapted to perform a Cyclic Redundancy Check on the data frame and has a length of two bytes; the Segment "Frame End" has a length of one byte; the player and the mobile communication device are connected with each other wiredly or wirelessly using a USB, a serial interface, Bluetooth or WIFI, the network is the network consisting of the mobile communication device and the authentication server.

The mobile communication device further comprises a second data processing module adapted to integrate the authentication data into the TCP data packet.

Advantageously, unlike the conventional technology, the present invention authenticates an audio-visual product using an authentication server over a wireless network. Consequently, it would be impossible to render the audio-visual product even if it is illegally copied because the decryption and authentication remains undone. Therefore, the present invention can effectively prevent illegal duplication of an audio-visual product.

### Brief Description of the Drawings

The technical solutions presented in the present disclosure will be more apparent from the following brief description of the drawings which will be referred to in the embodiments to be set forth below. Obviously, these drawings should be construed to be illustrative only, and starting from these given drawings, persons skilled in the art would be able to derive the other drawings without exercising any inventive skills.
FIG.1 is a structural diagram of an authentication system in accordance with a first embodiment of the present disclosure;
FIG.2 is a work flow diagram of the authentication system in accordance with the first embodiment of the present disclosure;
FIG.3 illustrates data transmission associated with the authentication system in accordance with the first embodiment of the present disclosure;
FIG. 4 is a structural diagram of an authentication system in accordance with a second embodiment of the present disclosure; and
FIG. 5 illustrates a data frame format associated with the player and the mobile communication device included in the authentication system in accordance with the second embodiment of the present disclosure.

### Detailed Description of the Invention

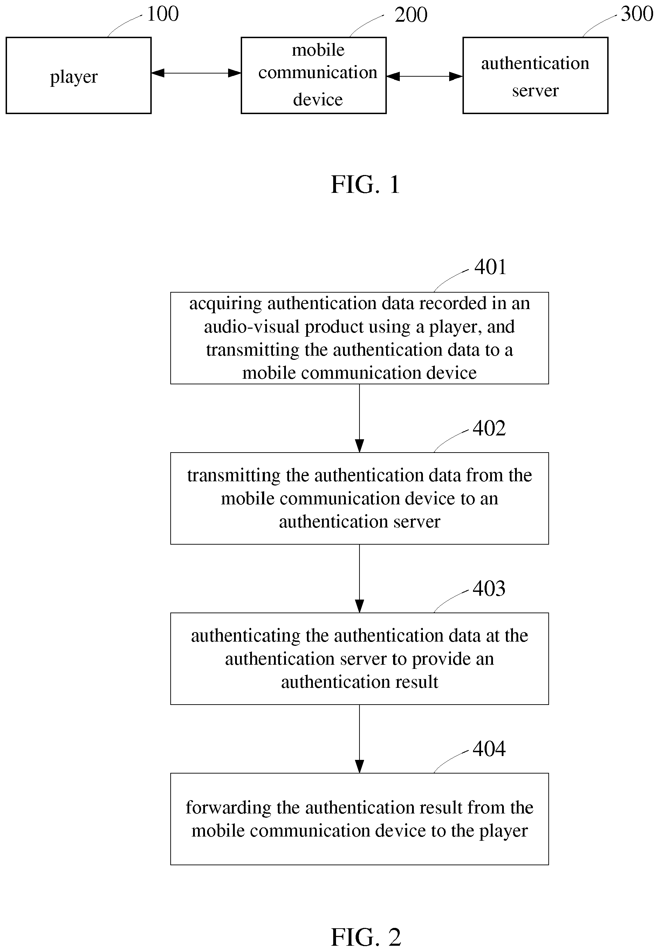

FIG.1 is a structural diagram of an authentication system in accordance with a first embodiment of the present disclosure. The authentication system as shown in FIG.1 comprises: a player 100, a mobile communication device 200 and an authentication server 300.

The player 100 is adapted to acquire authentication data recorded in an audio-visual product; the mobile communication device 200 is adapted to receive the authentication data from the player 100; and the authentication server 300 is adapted to authenticate the authentication data received from the mobile communication device 200 to provide an authentication result, and transmit the authentication result to the mobile communication device 200. The authentication result is then forwarded from the mobile communication device 200 to the player 100.

In a preferred embodiment, the player 100 may be used to play an audio-visual product such as a BD (Blue-ray Disc), DVD (Digital Versatile Disc) and CD (compact disc). The mobile communication device 200 may include terminals such as a mobile phone, a lap top computer, and a PDA (Personal Digital Assistant). The authentication server 300 may be implemented as a computer equipped with certain computing capability.

Now turning to FIG. 2, FIG. 2 illustrates a work flow diagram of the authentication system in accordance with the first embodiment of the present disclosure. As is shown therein, the authentication method in accordance with the first embodiment of the present disclosure comprises:

Step 401: acquiring authentication data recorded in an audio-visual product using a player 100, and transmitting the authentication data to a mobile communication device 200;

Step 402: transmitting the authentication data from the mobile communication device 200 to an authentication server 300;

Step 403: authenticating the authentication data at the authentication server 300 to provide an authentication result;

Step 404: forwarding the authentication result from the mobile communication device 200 to the player 100.

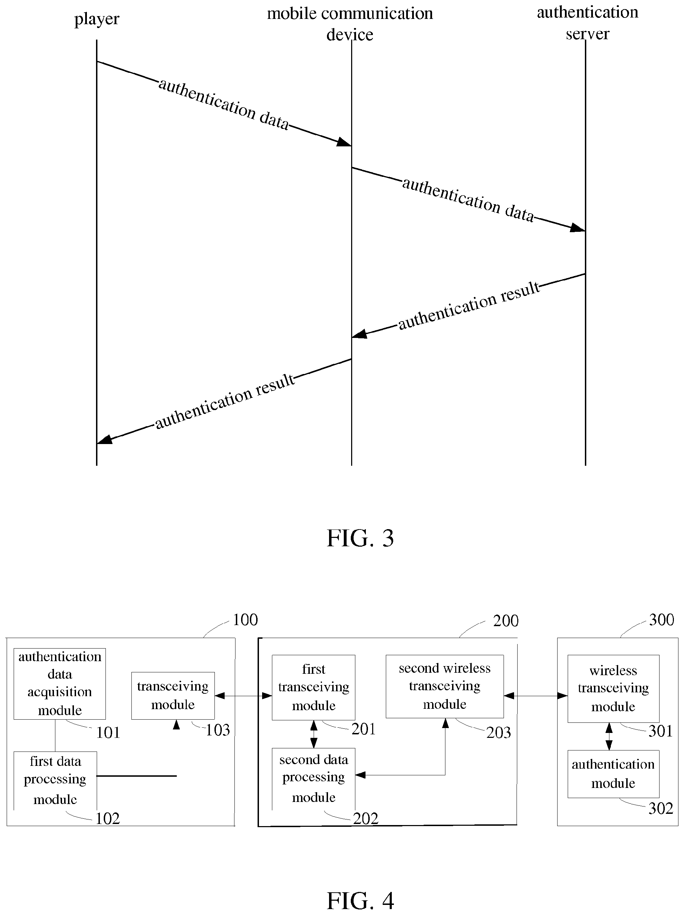

The method as provided will be illustrated more clearly with reference to FIG.3, which illustrates data transmission associated with the authentication system in accordance with the first embodiment of the present disclosure. As is shown in FIG.3, the mobile communication device 200 forwards the authentication data which the player 100 acquires from the audio-visual product to the authentication server 300. Based on the authentication data, the authentication server 300 generates the corresponding authentication result, and eventually returns the authentication result to the player 100 through the mobile communication device 200. The player 100 then determines whether to render the audio-visual product based on the authentication result. For example, if the authentication result indicates that it is authorized to render the audio-visual product, the player 100 may render the product. On the contrary, if the authentication result indicates that it is forbidden to render that product, the player 100 will refuse to render the product according to the authentication result.

Generally speaking, the authentication data may be implemented as an encrypted key. Based on the encrypted key, the authentication server 300 may compute the authentication result according to a pre-defined algorithm.

Reference is now made to FIG. 4, which illustrates an authentication system in accordance with a second embodiment of the present disclosure. This embodiment illustrates, in greater details, the modular structure of the player 100, the mobile communication device 200 and the authentication server 300 included in the authentication system in accordance with the first embodiment.

In the second embodiment of the present disclosure, the player 100 comprise: an authentication data acquisition module 101, a first data processing module 102, and a transceiving module 103, wherein the authentication data acquisition module 101 is adapted to acquire authentication data from an audio-visual product; the first data processing module 102 is adapted to integrate the authentication data into a first data packet of a first data format; and the transceiving module 103 is adapted to transmit the first data packet of the first data format to the mobile communication device 200. In addition, the transceiving module 103 of the player 100 is configured to receive an authentication result from the mobile communication device 200.

The mobile communication device 200 comprise: a first transceiving module 201, a second data processing module 202, and a second wireless transceiving module 203. The first transceiving module 201 is adapted to receive the authentication data from the transceiving module 103 and forward the authentication data to the second data processing module 202. In particular, the first transceiving module 201 receives the first data packet including the authentication data from the transceiving module 103 and transmits the first data packet to the second data processing module 202. Upon acquisition of the authentication data from the first transceiving module 201, the second data processing module 202 integrates the authentication data into a second data packet of a second data format, and transmits the second data packet to the second wireless transceiving module 203, which then sends the second data packet of the second data format, which includes the authentication data, to the authentication server 300.

In addition, the second wireless transceiving module 203 is configured to receive the authentication result having the second data format from the authentication server 300, and transmit it to the second data processing module 202. After the second data processing module 202 converts the authentication result to the first data format, the first transceiving module 201 transmits the authentication result to the transceiving module 103 of the player 100.

The authentication server 300 comprises a wireless transceiving module 301 and an authentication module 302, wherein the wireless transceiving module 301 is adapted to authenticate the authentication data associated with the audio-visual product of the player 100 received from the second transceiving module 203, and provide an authentication result, which is then transmitted from the wireless transceiving module 301 to the second transceiving module 203.

It is worth noting that after the acquisition of the authentication result based on the authentication data at the authentication server 300, the wireless transceiving module 301 transmits the authentication result in a second data format to the second wireless transceiving module 203 of the wireless communication device 200. The second wireless transceiving module 203 subsequently converts the authentication result in the second data format to the first data format. Afterwards, the first transceiving module 201 transmits the authentication result having the first data format to the transceiving module 103 of the player 100. So far, the player 100 is able to determine whether to render the audio-visual product according to the authentication result.

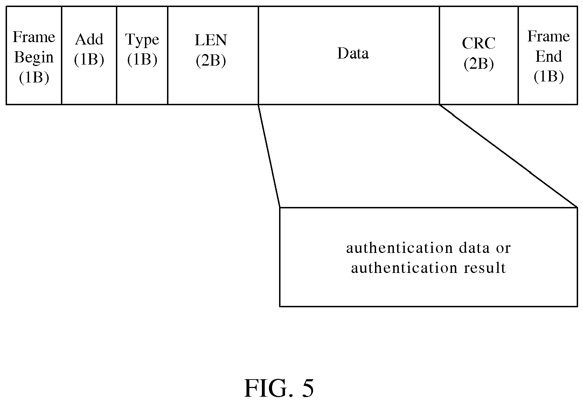

Hereunder reference is made to FIG. 5 to describe in greater details the data transmission between the player 100 and the mobile communication device 200. In particular, FIG.5 illustrates a frame format of the data being communicated between the player 100 and the mobile communication device 200 included in the authentication system in accordance with the second embodiment of the present disclosure. The player 100 and the mobile communication device 200 may be connected with each other wiredly or wirelessly using, for example, a USB, a serial interface, Bluetooth or WIFI. That is, the first data packet having the first data format may be communicated between the player 100 and the mobile communication device 200 in the aforesaid manners.

The data format of the first data packet may be as shown in FIG. 5, which includes Segment "Frame Begin" (the beginning of a frame), Segment "Add" (Address), Segment "Type", Segment "LEN" (length), Segment "Data", Segment "CRC" (Cyclic Redundancy Check), and Segment "Frame End" (the end of a frame). The length of various segments may be defined as needed. For example, preferably, Segment "Frame Begin" has a length of one byte (IB); Segment "Add" of one byte; Segment "Type" of one byte; Segment "LEN" of two bytes, Segment "Data" has a length ranging from zero to 127 bytes; Segment "CRC" of one byte; and Segment "Frame End" of one byte.

The data frame format as shown in FIG.5 may be more fully understood with reference to Table 1.1 to be set forth below.

**Table 1.1**

| Frame Begin (1 byte) | Add (1 byte) | Type (1 byte) | LEN (2 bytes) | Data (0∼127 bytes) | CRC (2 bytes) | Frame End (1 byte) |
|---|---|---|---|---|---|---|
| 0xF9 | reserved | 0x01 | *** | Data length | CRC | 0xF9 |

As is illustrated in Table 1.1, Segment "Frame Begin" may be defined as 0xF9; Segment "Frame End" as 0xF9. Therefore, during the data transmission, when "0xF9" is detected for the first time, it is determined as Segment "Frame Begin", and it starts to receive the frame data. When "0xF9" is detected for the second time, the end of the frame is determined. The data received between the two "0xF9" may be stored as a frame of data. Subsequently, the next "Frame Begin" is to be detected to receive the next frame of data.

Additionally, Segment "Add" may be set to "reserved" in order to distinguish data channels; Segment "Type" may define whether the information included in Segment "Data" belongs to data or a control command. Details may be seen in the following Table 1.2.

**Table 1.2**

| Definitions of Segment "Type" | |
|---|---|
| 0x01 | Segment "Data" includes data content (0 to 127 bytes) |
| 0x02 | Segment "Data" include a control command (2 bytes) |

As Table 1.2 illustrates, when Segment "Type" is set to "0x01", it means that Segment "Data" includes data content having a length between 0 and 127 bytes; while when Segment "Type" is set to "0x02", it means that Segment "data" includes a control command having a length of two bytes.

The following Table 1.3 is to illustrate Segment "Data" in greater details.

**Table 1.3**

| Definitions of Segment "Data" | | | |
|---|---|---|---|
| Type = 0x01 | data | | |
| Type = 0x02 | → | 0x01,0x00 | inquiring whether the wireless communication device has been connected to a network |
| Data = 2 byte | ← | 0x01,0x01 | connected |
| | ← | 0x01,0x00 | unconnected |

As is shown in Table 1.3, when Segment "Type" is set to "0x01", it means that Segment "Data" includes data content, i.e., the authentication data or the authentication result in the present invention. When Segment "Type" is set to "0x02", it means that Segment "Data" includes a control command. When Segment "Data" is set to "0x01, 0x00", it denotes an inquiry of whether the wireless communication device has been connected to a network. If Segment "Data" is set to "0x01, 0x01", it means that the wireless communication device has been connected to a network. By contrast, if Segment "Data" is set to "0x01, 0x00", it means that the wireless communication device has not yet been connected to a network. Consequently, upon receipt of the data having the first data format, it is possible to gain knowledge of whether the wireless communication device 200 is connected to a network by observing the setting of Segment "Data". The "network" referred to the network consisting of the wireless communication device 200 and the authentication server 300.

Segment "LEN" represents the length of Segment "Data", and Segment "CRC" is adapted to perform a Cyclic Redundancy Check on the data frame.

In view of the above, the first data format according to the present disclosure may be implemented as the data format as shown in FIG.5. The authentication data or authentication result may be integrated into the data packet having such a first data format, thereby providing the authentication data or result having the first data format. It bears mentioning that when the authentication data is integrated into the data packet of the first data format, Segment "Type" may be set to "0x01", such that the authentication data or result is incorporated into each frame.

In addition, the second data format involved in the second embodiment of the present invention may preferably take a TCP data format. Accordingly, the second data packet having the second data format may be a TCP data packet. By integrating the authentication data into the TCP data packet, the authentication data having a TCP data format may be provided so as to be wirelessly transmitted between the wireless communication device 200 and the authentication server 300. Furthermore, the authentication result that the authentication module 302 achieves based on the authentication data may also be transmitted in a TCP data format from the wireless transceiving module 301 to the second wireless transceiving module 203.

It is worthwhile to note that the first data format disclosed above is simply a preferred manner for transmitting data between the player 100 and the wireless communication device 200. It would be appreciated that the same technical effect may also be fulfilled using the other frame structure having the same function. Likewise, the second data format as the TCP data format is also one of the preferred solutions for transmitting data between the authentication server 300 and the wireless communication device 200. Any other data transmission formats having the same function may be also used to produce the same technical effects. They do not make any restrictions to the scope of the present invention.

In view of the above, the present invention performs an authentication on an audio-visual product using an authentication server over a wireless network. Since the authentication process is conducted on the authentication server, it would be impossible to render the audio-visual product on the player even if the product is duplicated because the authentication server has not conducted decryption and authentication. Consequently, the present invention effectively prevents illegal reproduction of audio-visual products.

## Claims

1. An authentication method, comprising:
a) acquiring authentication data recorded in an audio-visual product using a player (100), and transmitting the authentication data to a mobile communication device (200) (401);
b) transmitting the authentication data from the mobile communication device (200) to an authentication server (300) (402);
c) authenticating the authentication data at the authentication server (300) to provide an authentication result (403);
d) transmitting the authentication result from the authentication server (300) to the mobile communication device (200); and
e) transmitting the authentication result from the mobile communication device (200) to the player (100) (404);
**characterized in that** a first data packet having a first data format is communicated between the player (100) and the mobile communication device (200), a second data packet having a second data format is communicated between the mobile communication device (200) and the authentication server (300);
the first data packet of the first data format comprising Segment "Frame Begin", Segment "Add", Segment "Type", Segment "LEN", Segment "Data", Segment "CRC", and Segment "Frame End";
the Segment "Frame Begin" has a length of one byte;
the Segment "Add" is set to "reserved" in order to distinguish data channels and has a length of one byte;
the Segment "Type" is adapted to define information contained in the Segment "Data" as a data content or a control command, the data content is the authentication data or the authentication result, the control command is adapted to denote an inquiry of whether the mobile communication device (200) has been connected to a network, when the Segment "Data" includes the data content, the data content has a length ranging from zero to 127 bytes, when the Segment "Data" includes the control command, the control command has a length of two bytes;
the Segment "LEN" represents the length of Segment "Data" and has a length of two bytes;
the Segment "CRC" is adapted to perform a Cyclic Redundancy Check on the data frame and has a length of two bytes;
the Segment "Frame End" has a length of one byte;
the second data packet is a TCP data packet;
the player (100) and the mobile communication device (200) are connected with each other in a wired or wireless manner using a USB, a serial interface, Bluetooth or WIFI, the network is the network consisting of the mobile communication device (200) and the authentication server (300).

2. The authentication method according to claim 1, wherein step a) comprises integrating the authentication data into the first data packet of the first data format using the player.

3. The authentication method according to claim 2, wherein step b) comprises integrating the authentication data into the TCP data packet sent by the mobile communication device (200).

4. A player for rendering an audio-visual product, comprising:
an authentication data acquisition module (101) adapted to acquire authentication data from an audio-visual product; and
a transceiving module (103) adapted to transmit the authentication data to a mobile communication device (200) and receive an authentication result from the mobile communication device (200);
**characterized in that** a first data packet having a first data format is communicated between the player (100) and the mobile communication device (200);
the first data packet of the first data format comprising Segment "Frame Begin", Segment "Add", Segment "Type", Segment "LEN", Segment "Data", Segment "CRC", and Segment "Frame End";
the Segment "Frame Begin" has a length of one byte;
the Segment "Add" is set to "reserved" in order to distinguish data channels and has a length of one byte;
the Segment "Type" is adapted to define information contained in the Segment "Data" as a data content or a control command, the data content is the authentication data or the authentication result, the control command is adapted to denote an inquiry of whether the mobile communication device (200) has been connected to a network, when the Segment "Data" includes the data content, the data content has a length ranging from zero to 127 bytes, when the Segment "Data" includes the control command, the control command has a length of two bytes;
the Segment "LEN" represents the length of Segment "Data", and has a length of two bytes;
the Segment "CRC" is adapted to perform a Cyclic Redundancy Check on the data frame and has a length of two bytes;
the Segment "Frame End" has a length of one byte;
the player (100) and the mobile communication device (200) are connected with each other in a wired or wireless manner using a USB, a serial interface, Bluetooth or WIFI, the network is the network consisting of the mobile communication device (200) and the authentication server (300).

5. The player according to claim 4, wherein the player further comprises a first data processing module (102) adapted to integrate the authentication data into a first data packet of the first data format.

6. A mobile communication device, comprising:
a first transceiving module (201) adapted to receive authentication data from a player (100); and
a second wireless transceiving module (203) adapted to transmit the authentication data to an authentication server (300) and receive an authentication result from the authentication server (300), which authentication result is then transmitted from the first transceiving module (201) to the player (100);
**characterized in that** a first data packet having a first data format is communicated between the player (100) and the mobile communication device (200), a second data packet having a second data format is communicated between the mobile communication device (200) and the authentication server (300);
the first data packet of the first data format comprising Segment "Frame Begin", Segment "Add", Segment "Type", Segment "LEN", Segment "Data", Segment "CRC", and Segment "Frame End";
the Segment "Frame Begin" has a length of one byte;
the Segment "Add" is set to "reserved" in order to distinguish data channels and has a length of one byte;
the Segment "Type" is adapted to define information contained in the Segment "Data" as a data content or a control command, the data content is the authentication data or the authentication result, the control command is adapted to denote an inquiry of whether the mobile communication device (200) has been connected to a network, when the Segment "Data" includes the data content, the data content has a length ranging from zero to 127 bytes, when the Segment "Data" includes the control command, the control command has a length of two bytes;
the Segment "LEN" represents the length of Segment "Data", and has a length of two bytes;
the Segment "CRC" is adapted to perform a Cyclic Redundancy Check on the data frame and has a length of two bytes;
the Segment "Frame End" has a length of one byte;
the second data packet is a TCP data packet;
the player (100) and the mobile communication device (200) are connected with each other in a wired or wireless manner using a USB, a serial interface, Bluetooth or WIFI, the network is the network consisting of the mobile communication device (200) and the authentication server (300).

7. The mobile communication device according to claim 6, further comprising a second data processing module (202) adapted to integrate the authentication data into the TCP data packet.

## Patentansprüche

1. Authentifizierungsverfahren, umfassend:
a) Erfassen von in einem Audio/Videoprodukt gespeicherten Authentifizierungsdaten, indem ein Leser benutzt wird, und Übertragen der Authentifizierungsdaten an ein mobiles Kommunikationsgerät (200) (401);
b) Übertragen der Authentifizierungsdaten vom mobilen Kommunikationsgerät (200) an einen Authentifizierungsserver (300) (402);
c) Authentifizieren der Authentifizierungsdaten am Authentifizierungsserver (300) zur Bereitstellung eines Authentifizierungsergebnisses (403);
d) Übertragen des Authentifizierungsergebnisses vom Authentifizierungsserver (300) an das mobile Kommunikationsgerät (200); und
e) Übertragen des Authentifizierungsergebnisses vom mobile Kommunikationsgerät (200) an den Leser (100) (404);
**dadurch gekennzeichnet, dass** ein erstes Datenpaket, das ein erstes Datenformat aufweist, zwischen dem Leser (100) und dem mobilen Kommunikationsgerät (200) übermittelt wird, ein zweites Datenpaket, das ein zweites Datenformat aufweist, zwischen dem mobilen Kommunikationsgerät (200) und dem Authentifizierungsserver (300) übermittelt wird;
das erste Datenpaket des ersten Formats das Segment "Framebeginn", das Segment "Anschrift", das Segment "Typ", das Segment "LEN", das Segment "Daten", und das Segment "Frameende" umfasst;
das Segment "Framebeginn" eine Länge eines Bytes aufweist;
das Segment "Anschrift" auf "vorbehalten" zur Unterscheidung der Datenkanäle eingestellt wird und eine Länge eines Bytes aufweist;
das Segment "Typ" dem Definieren von Informationen, die im Segment "Daten" als ein Dateninhalt oder als ein Steuerbefehl enthalten sind, angepasst sind, der Dateninhalt die Authentifizierungsdaten oder das Authentifizierungsergebnis umfasst, der Steuerbefehl dem Anzeigen einer Anfrage angepasst ist, ob das mobile Kommunikationsgerät (200) mit einem Netzwerk verbunden ist, wenn das Segment "Daten" den Dateninhalt umfasst, der Dateninhalt eine Länge von Null bis 127 Bytes aufweist, wenn das Segment "Daten" den Steuerbefehl umfasst, der Steuerbefehl eine Länge von zwei Bytes aufweist;
das Segment "LEN" die Länge des Segments "Daten" darstellt und eine Länge von zwei Bytes aufweist;
das Segment "CRC" dem Ausführen einer zyklischen Redundanzprüfung auf dem Datenframe angepasst ist und eine Länge von zwei Bytes aufweist;
das Segment "Frameende" eine Länge eines Bytes aufweist;
das zweite Datenpaket ein TCP-Datenpaket ist;
der Leser (100) und das mobile Kommunikationsgerät (200) miteinander verdrahtet oder drahtlos verbunden sind, indem eine USB-Verbindung, eine serielle Schnittstelle, Bluetooth oder WIFI benutzt wird, das Netzwerk das Netzwerk ist, das das mobile Kommunikationsgerät (200) und den Authentifizierungsserver (300) umfasst.

2. Authentifizierungsverfahren nach Anspruch 1, wobei Schritt a) das Integrieren der Authentifizierungsdaten in das erste Datenpaket des ersten Datenformats umfasst, indem ein Leser benutzt wird.

3. Authentifizierungsverfahren nach Anspruch 2, wobei Schritt b) das Integrieren der Authentifizierungsdaten in das TCP-Datenpaket umfasst, das vom mobilen Kommunikationsgerät gesendet worden ist.

4. Leser zur Wiedergabe eines Audio/Videoproduktes, umfassend:
ein Authentifizierungsdatenerfassungsmodul (101), das der Erfassung von Authentifizierungsdaten aus einem Audio/Videoprodukt angepasst ist; und
ein Übertragungsmodul (103), das der Übertragung von Authentifizierungsdaten an ein mobiles Kommunikationsgerät (200) und dem Empfang eines Authentifizierungsergebnisses aus einem Kommunikationsgerät (200) angepasst ist;
**dadurch gekennzeichnet, dass** ein erstes Datenpaket, das ein erstes Datenformat aufweist, zwischen dem Leser (100) und dem mobilen Kommunikationsgerät (200) übermittelt wird, ein zweites Datenpaket, das ein zweites Datenformat aufweist, zwischen dem mobilen Kommunikationsgerät (200) und dem Authentifizierungsserver (300) übermittelt wird;
das erste Datenpaket des ersten Formats das Segment "Framebeginn", das Segment "Anschrift", das Segment "Typ", das Segment "LEN", das Segment "Daten", und das Segment "Frameende" umfasst;
das Segment "Framebeginn" eine Länge eines Bytes aufweist;
das Segment "Anschrift" auf "vorbehalten" zur Unterscheidung der Datenkanäle eingestellt ist und
eine Länge eines Bytes aufweist;
das Segment "Typ" dem Definieren von Informationen, die im Segment "Daten" als ein Dateninhalt oder als ein Steuerbefehl enthalten sind, angepasst sind, der Dateninhalt die Authentifizierungsdaten oder das Authentifizierungsergebnis umfasst, der Steuerbefehl dem Anzeigen einer Anfrage angepasst ist, ob das mobile Kommunikationsgerät (200) mit einem Netzwerk verbunden ist, wenn das Segment "Daten" den Dateninhalt umfasst, der Dateninhalt eine Länge von Null bis 127 Bytes aufweist, wenn das Segment "Daten" den Steuerbefehl umfasst, der Steuerbefehl eine Länge von zwei Bytes aufweist;
das Segment "LEN" die Länge des Segments "Daten" darstellt und eine Länge von zwei Bytes aufweist;
das Segment "CRC" dem Ausführen einer zyklischen Redundanzprüfung auf dem Datenframe angepasst ist und eine Länge von zwei Bytes aufweist;
das Segment "Frameende" eine Länge eines Bytes aufweist;
der Leser (100) und das mobile Kommunikationsgerät (200) miteinander verdrahtet oder drahtlos verbunden sind, indem eine USB-Verbindung, eine serielle Schnittstelle, Bluetooth oder WIFI benutzt wird, das Netzwerk das Netzwerk ist, das das mobile Kommunikationsgerät (200) und den Authentifizierungsserver (300) umfasst.

5. Leser nach Anspruch 4, wobei der Leser weiter ein erstes Datenverarbeitungsmodul (102) umfasst, das der Integration der Authentifizierungsdaten in das erste Datenpaket des ersten Datenformats umfasst.

6. Mobiles Kommunikationsgerät, umfassend:
ein erstes Übertragungsmodul (201), das dem Empfang von Authentifizierungsdaten aus einem Leser (100) angepasst ist;
ein zweites Übertragungsmodul (203), das der Übertragung der Authentifizierungsdaten an einen Authentifizierungsserver (300) und dem Empfang eines Authentifizierungsergebnisses aus dem Authentifizierungsserver (300) angepasst ist, welches Authentifizierungsergebnis dann vom ersten Übertragungsmodul (201) an den Leser (100) übertragen wird ;
**dadurch gekennzeichnet, dass** ein erstes Datenpaket, das ein erstes Datenformat aufweist, zwischen dem Leser (100) und dem mobilen Kommunikationsgerät (200) übermittelt wird, ein zweites Datenpaket, das ein zweites Datenformat aufweist, zwischen dem mobilen Kommunikationsgerät (200) und dem Authentifizierungsserver (300) übermittelt wird;
das erste Datenpaket des ersten Formats das Segment "Framebeginn", das Segment "Anschrift", das Segment "Typ", das Segment "LEN", das Segment "Daten", und das Segment "Frameende" umfasst;
das Segment "Framebeginn" eine Länge eines Bytes aufweist;
das Segment "Anschrift" auf "vorbehalten" zur Unterscheidung der Datenkanäle eingestellt ist und
eine Länge eines Bytes aufweist;
das Segment "Typ" dem Definieren von Informationen, die im Segment "Daten" als ein Dateninhalt oder als ein Steuerbefehl enthalten sind, angepasst sind, der Dateninhalt die Authentifizierungsdaten oder das Authentifizierungsergebnis umfasst, der Steuerbefehl dem Anzeigen einer Anfrage angepasst ist, ob das mobile Kommunikationsgerät (200) mit einem Netzwerk verbunden ist, wenn das Segment "Daten" den Dateninhalt umfasst, der Dateninhalt eine Länge von Null bis 127 Bytes aufweist, wenn das Segment "Daten" den Steuerbefehl umfasst, der Steuerbefehl eine Länge von zwei Bytes aufweist;
das Segment "LEN" die Länge des Segments "Daten" darstellt und eine Länge von zwei Bytes aufweist;
das Segment "CRC" dem Ausführen einer zyklischen Redundanzprüfung auf dem Datenframe angepasst ist und eine Länge von zwei Bytes aufweist;
das Segment "Frameende" eine Länge eines Bytes aufweist;
das zweite Datenpaket ein TCP-Datenpaket ist;
der Leser (100) und das mobile Kommunikationsgerät (200) miteinander verdrahtet oder drahtlos verbunden sind, indem eine USB-Verbindung, eine serielle Schnittstelle, Bluetooth oder WIFI benutzt wird, das Netzwerk das Netzwerk ist, das das mobile Kommunikationsgerät (200) und den Authentifizierungsserver (300) umfasst.

7. Mobiles Kommunikationsgerät nach Anspruch 6, das weiter ein zweites Datenverarbeitungsmodul (202) umfasst, das der Integration der Authentifizierungsdaten in das TCP-Datenpaket angepasst ist.

## Revendications

1. Procédé d'authentification comprenant:
a) acquérir des données d'authentification enregistrées dans un produit audiovisuel en utilisant un lecteur (100), et transmettre les données d'authentification à un dispositif mobile de communication (200) (401);
b) transmettre les données d'authentification depuis le dispositif mobile de communication (200) à un serveur d'authentification (300) (402);
c) authentifier les données d'authentification au serveur d'authentification (300) afin de procurer un résultat d'authentification (403);
d) transmettre le résultat d'authentification depuis le serveur d'authentification (300) au dispositif mobile de communication (200); et
e) transmettre le résultat d'authentification depuis le dispositif mobile de communication (200) au lecteur (100) (404);
**caractérisé en ce qu'**un premier paquet de données présentant un premier format de données est communiqué entre le lecteur (100) et le dispositif mobile de communication (200), un deuxième paquet de données présentant un deuxième format de données est communiqué entre le dispositif mobile de communication (200) et le serveur d'authentification (300);
le premier paquet de données du premier format de données comprend le segment "début de trame", le segment "adresse", le segment "type", le segment "LEN", le segment "données", le segment "CRC" et le segment "fin de trame";
le segment "début de trame" présente une longueur d'un octet;
le segment "adresse" est réglé sur "réservé" afin de distinguer les canaux de données et présente une longueur d'un octet;
le segment "type" est adapté de façon à définir des informations contenues dans le segment "données" comme un contenu de données ou comme une commande de contrôle, le contenu de données comprend les données d'authentification ou le résultat d'authentification, la commande de contrôle est adaptée pour signifier une demande quant à savoir si le dispositif mobile de communication (200) a été connecté à un réseau, lorsque le segment "données" inclut le contenu de données, le contenu de données présente une longueur variant de zéro à 127 octets, lorsque le segment "données" inclut la commande de contrôle, le contrôle de commande présente une longueur de deux octets;
le segment "LEN" représente la longueur du segment "données" et présente une longueur de deux octets;
le segment "CRC" est adapté pour effectuer un contrôle de redondance cyclique sur la trame de données et présente une longueur de deux octets;
le segment "fin de trame" présente une longueur d'un octet;
le deuxième paquet de données est un paquet de données TCP;
le lecteur (100) et le dispositif mobile de communication (200) sont connectés l'une à l'autre par fil ou sans fil en utilisant une connexion USB, une interface sérielle, Bluetooth ou WIFI, le réseau est le réseau constitué du dispositif mobile de communication (200) et du serveur d'authentification (300).

2. Procédé d'authentification selon la revendication 1, dans laquelle l'étape a) comprend l'intégration des données d'authentification dans le premier paquet du premier format de données en utilisant le lecteur.

3. Procédé d'authentification selon la revendication 2, dans laquelle l'étape b) comprend l'intégration des données d'authentification dans le paquet de données TCP envoyé par le dispositif mobile de communication (200).

4. Lecteur apte à rendre un produit audio-visuel, comprenant:
un module d'acquisition de données d'authentification (101) adapté pour acquérir des données d'authentification provenant d'un produit audio-visuel; et
un module de transmission (103) adapté pour transmettre les données d'authentification à un dispositif mobile de communication (200) et pour recevoir un résultat d'authentification du dispositif mobile de communication (200);
**caractérisé en ce qu'**un premier paquet de données présentant un premier format de données est communiqué entre le lecteur (100) et le dispositif mobile de communication (200);
le premier paquet de données du premier format de données comprend le segment "début de trame", le segment "adresse", le segment "type", le segment "LEN", le segment "données", le segment "CRC" et le segment "fin de trame";
le segment "début de trame" présente une longueur d'un octet;
le segment "adresse" est réglé sur "réservé" afin de distinguer les canaux de données et présente une longueur d'un octet;
le segment "type" est adapté de façon à définir des informations contenues dans le segment "données" comme un contenu de données ou comme une commande de contrôle, le contenu de données comprend les données d'authentification ou le résultat d'authentification, la commande de contrôle est adaptée pour signifier une demande quant à savoir si le dispositif mobile de communication (200) a été connecté à un réseau, lorsque le segment "données" inclut le contenu de données, le contenu de données présente une longueur variant de zéro à 127 octets, lorsque le segment "données" inclut la commande de contrôle, le contrôle de commande présente une longueur de deux octets;
le segment "LEN" représente la longueur du segment "Données" et présente une longueur de deux octets;
le segment "CRC" est adapté pour effectuer un contrôle de redondance cyclique sur la trame de données et présente une longueur de deux octets;
le segment "fin de trame" présente une longueur d'un octet;
le lecteur (100) et le dispositif mobile de communication (200) sont connectés l'une à l'autre par fil ou sans fil en utilisant une connexion USB, une interface sérielle, Bluetooth ou WIFI, le réseau est le réseau constitué du dispositif mobile de communication (200) et du serveur d'authentification (300).

5. Lecteur selon la revendication 4, dans lequel le lecteur comprend en outre un premier module de traitement de données (102) adapté pour intégrer les données d'authentification dans un premier paquet de données du premier format de données.

6. Dispositif de communication mobile, comprenant:
un premier module de transmission (201) adapté pour recevoir des données d'authentification d'un lecteur (100); et
un deuxième module de transmission sans fil (203) adapté pour transmettre les données d'authentification à un serveur d'authentification (300) et de recevoir un résultat d'authentification (300), lequel résultat d'authentification est alors transmit du premier module de transmission (201) au lecteur (100);
**caractérisé en ce que** un premier paquet de données présentant un premier format de données est communiqué entre le lecteur (100) et le dispositif mobile de communication (200), un deuxième paquet de données présentant un deuxième format de données est communiqué entre le dispositif mobile de communication (200) et le serveur d'authentification (300);
le premier paquet de données du premier format de données comprend le segment "début de trame", le segment "adresse", le segment "type", le segment "LEN", le segment "données", le segment "CRC" et le segment "fin de trame";
le segment "début de trame" présente une longueur d'un octet;
le segment "adresse" est réglé sur "réservé" afin de distinguer les canaux de données et présente une longueur d'un octet;
le segment "type" est adapté de façon à définir des informations contenues dans le segment "données" comme un contenu de données ou comme une commande de contrôle, le contenu de données comprend les données d'authentification ou le résultat d'authentification, la commande de contrôle est adaptée pour signifier une demande quant à savoir si le dispositif mobile de communication (200) a été connecté à un réseau, lorsque le segment "données" inclut le contenu de données, le contenu de données présente une longueur variant de zéro à 127 octets, lorsque le segment "données" inclut la commande de contrôle, le contrôle de commande présente une longueur de deux octets;
le segment "LEN" représente la longueur du segment "Données" et présente une longueur de deux octets;
le segment "CRC" est adapté pour effectuer un contrôle de redondance cyclique sur la trame de données et présente une longueur de deux octets;
le segment "fin de trame" présente une longueur d'un octet;
le deuxième paquet de données est un paquet de données TCP;
le lecteur (100) et le dispositif mobile de communication (200) sont connectés l'une à l'autre par fil ou sans fil en utilisant une connexion USB, une interface sérielle, Bluetooth ou WIFI, le réseau est le réseau constitué du dispositif mobile de communication (200) et du serveur d'authentification (300).

7. Dispositif de communication mobile selon la revendication 6, comprenant en outre un deuxième module de traitement de données (202) adapté pour intégrer les données d'authentification dans le paquet de données TCP.
